# EUROPEAN PATENT APPLICATION

(11) **EP 0 955 717 A2**
(43) Date of publication of application: **10.11.1999**
(21) Application number: 99660068.0
(22) Date of filing: 29.04.1999
(51) Int. Cl.: H02K 17/18, H02K 16/02

(54) **Squirrel cage induction motor**

(30) Priority: 04.05.1998 FI 980981
(71) Applicant: ABB Motors Oy, 65320 Vaasa (FI)
(72) Inventor: Haring, Tapio, 65370 Vaasa (FI); Ikäheimo, Jouni, 61310 Panttila (FI)
(74) Representative: Peltonen, Antti Sakari

(57) **Abstract**

A squirrel-cage induction motor comprising a rotor (1) provided with a squirrel-cage winding (2) made by casting. According to the invention, the rotor (1) comprises two rotor parts (1a, 1b) arranged on a common shaft (3) and provided with a complete squirrel-cage winding (2a), the parts being connected together from short-circuiting rings (4a, 4b) situated at one end of the rotor parts.

## Description

### FIELD OF THE INVENTION

The invention relates to a squirrel-cage induction motor comprising a rotor provided with a squirrel-cage winding made by casting.

In most rotors used in squirrel-cage induction motors, the squirrel-cage winding is made from copper or aluminium by casting. In the casting, rotor rods are cast in grooves of the rotor made from dynamo sheets, and short-circuiting rings connecting the rods are cast at the rotor ends. Fan blades used for cooling the motor are often cast in the same casting process as a part of a short-circuiting ring. For this purpose, each end of the rotor mould is provided with cavities for the fan blades of the short-circuiting ring. The structure of the mould is therefore somewhat complicated. On the other hand, the larger the motor, the more difficult the casting process will be due to the great amount of material needed. The manufacture of large moulds is also expensive and time-consuming.

### SUMMARY OF THE INVENTION

The purpose of the present invention is to provide a squirrel-cage induction motor comprising a rotor equipped with a squirrel-cage winding made by casting, the manufacture of the motor comprising none of the aforementioned problems. This is achieved with a squirrel-cage induction motor according to the invention, which is characterized in that the rotor comprises two rotor parts arranged on a common shaft and provided with a complete squirrel-cage winding, the parts being connected together from short-circuiting rings situated at one end of the rotor parts. A complete squirrel-cage winding means herein that it comprises both the rotor rods and the short-circuiting rings connecting the rods at each end of the rotor, or in this case the rotor parts. By dividing the rotor into two parts, the amount of the material needed in the casting of each part can be halved. The construction of the casting machine becomes thus more simple and the investment costs of the machine decrease considerably.

Even though the rotor parts may differ from each other, in the arrangement that is most advantageous regarding the manufacturing technique the rotor parts are identical and arranged opposite one another on a common shaft. The same mould can thus be used to manufacture both rotor parts, and the mould for one rotor end need not be provided with cavities for the fan blades of the short-circuiting ring, wherefore the mould is further simplified and the costs of making the mould decrease.

The rotor parts are most preferably joined by means of a welded or soldered joint. When this joint is extended to cover the entire surface of the short-circuiting ring, the rotor parts can be connected together in a highly reliable and efficient manner regarding both the mechanical and electric connection.

Further, it is preferable that at the joint short-circuiting ring situated at the connecting point of the rotor parts, the rotor comprises a section that is smaller in diameter than the rest of the rotor. By shaping the short-circuiting ring situated between the rotor parts, it is possible to adjust the starting current and torque of the motor.

Due to the structure of the rotor in the squirrel-cage induction motor according to the invention, the rotor parts may also comprise axial rotor grooves, and the rotor parts are connected in a position where the rotor grooves thereof have been rotated an optimum amount with respect to one another. In such a case, the rotor grooves do not have to be oblique as usual, but direct grooves suffice. This facilitates the casting and improves the noise level of the motor.

### LIST OF FIGURES

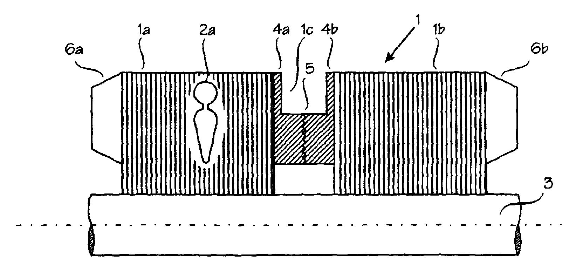

In the following, the squirrel-cage induction motor according to the invention will be described in greater detail with reference to the accompanying drawing, which shows a partial axial section of a rotor in the squirrel-cage induction motor according to the invention.

### DETAILED DESCRIPTION OF THE INVENTION

The figure shows a partial axial section of a rotor 1 in the squirrel-cage induction motor according to the invention. The embodiment shown in the figure comprises two identical rotor parts 1a and 1b, which are arranged opposite one another on a common shaft 3. Each identical rotor part 1a and 1b comprises direct rotor grooves comprising rotor rods cast from copper or aluminium, forming a part of a squirrel-cage winding. Rotor rod 2a is the only rod shown schematically in rotor part 1a. The direct rotor rods 2a are connected at the opposite ends of rotor part 1a by short-circuiting rings one of which comprises a fan blade 6a. The short-circuiting ring at the other end of the rotor is denoted by reference numeral 4a. Correspondingly, the other rotor part 1b comprises at one end a fan blade 6b and at the other end a short-circuiting ring 4b.

According to the invention, the rotor parts 1a and 1b are positioned opposite one another on the common shaft 3 such that the short-circuiting rings 4a and 4b of the parts are connected by a welded or soldered joint 5. As shown in the figure, the joint extends over the entire area of the corresponding surfaces of the short-circuiting rings. Such a joint can be achieved by leaving at first a narrow gap between the short-circuiting rings 4a and 4b to be welded together, or by forming a groove of a suitable width at this point, the groove being filled from the outside by starting the filling from the area of the short-circuiting rings situated closest to the rotor shaft 3. By rotating the rotor parts 1a and 1b continuously during the welding or soldering, the gap between the short-circuiting rings 4a and 4b can be filled along its entire radial length. In such a manner, the rotor parts 1a and 1b can be connected by a joint that is very strong both mechanically and electrically.

The unit formed by connecting together the short-circuiting rings 4a and 4b can be peeled smaller at the joint or seam and at the areas situated axially on both sides of the joint. The rotor can thus be provided with a section that has a smaller diameter than the rest of the rotor. The groove formed in this manner is denoted in the figure by reference numeral 1c. By shaping the short-circuiting ring between the rotor parts 1a and 1b in this manner, it is possible to adjust the starting current and torque of the motor.

When the rotor parts are connected, it is possible to perform the connection in a position where the rotor grooves have been rotated a desired amount with respect to one another. Therefore the use of oblique rotor grooves is not necessary but rotor parts 1a and 1b equipped with direct grooves are sufficient. This facilitates the casting and improves the noise level of the motor.

As disclosed above, the squirrel-cage induction motor according to the invention provides several advantages regarding both electrotechnology and casting technology. When the rotor is made of two parts, the amount of material needed in one casting process is reduced to a half. The construction of the casting machine thus becomes simpler and the investment costs of the machine decrease. When two rotor parts are cast in the same mould, which makes them at least substantially identical, and arranged opposite one another on a common shaft, the mould for one rotor end does not have to be provided with cavities for the fan blades of the short-circuiting ring, wherefore the mould is simpler and less expensive to manufacture. The rotor parts do not require separate moulds, either. Further, the present construction enables the shaping of the short-circuiting ring between the rotor parts, wherefore the starting current and torque of the motor can be adjusted. The use of oblique rotor grooves is no longer necessary, either, since the rotor parts can be rotated with respect to one another a desired amount, for example one stator groove, before they are connected together.

The squirrel-cage induction motor according to the invention is described above by means of only one exemplary embodiment, and it should be understood that it can be modified in several manners without deviating from the scope of protection defined in the appended claims.

## Claims

1. A squirrel-cage induction motor comprising a rotor (1) provided with a squirrel-cage winding (2) made by casting, **characterized** in that the rotor (1) comprises two rotor parts (1a, 1b) arranged on a common shaft (3) and provided with a complete squirrel-cage winding (2a), the parts being connected together from short-circuiting rings (4a, 4b) situated at one end of the rotor parts.

2. A squirrel-cage induction motor according to claim 1, **characterized** in that the rotor parts (1a, 1b) are at least substantially identical and arranged opposite one another on the common shaft (3).

3. A squirrel-cage induction motor according to claim 1 or 2, **characterized** in that the rotor parts (1a, 1b) are connected together by a welded or soldered joint (5).

4. A squirrel-cage induction motor according to any one of claims 1 to 3, **characterized** in that the rotor comprises, at the joint short-circuiting ring (4a, 4b) situated at the connecting point of the rotor parts (1a, 1b), a section (1c) with a smaller diameter than the rest of the rotor (1).

5. A squirrel-cage induction motor according to any one of claims 1 to 4, **characterized** in that the rotor parts (1a, 1b) comprise axial rotor grooves, and that the rotor parts are connected in a position where their rotor grooves have been rotated with respect to one another.
